# EUROPÄISCHE PATENTSCHRIFT

(11) **EP 1 519 058 B1**
(45) Veröffentlichungstag und Bekanntmachung des Hinweises auf die Patenterteilung: **24.12.2014**
(21) Anmeldenummer: 04020704.5
(22) Anmeldetag: 01.09.2004
(51) Int. Cl.: F16C 35/06, F03D 11/00, F16C 19/38, F16C 33/36, F16C 33/60

(54) **Windkraftanlage mit Lagerung für Rotor**
Wind turbine comprising a bearing for the rotor
Éolienne comprenant un palier pour le rotor

(30) Priorität: 23.09.2003 DE 20314660 U
(43) Veröffentlichungstag der Anmeldung: 30.03.2005
(73) Patentinhaber: AB SKF, 415 50 Göteborg (SE)
(72) Erfinder: Pickel, Edgar, 97334 Sommerach (DE)
(74) Vertreter: Kohl, Thomas

(56) Entgegenhaltungen:
- EP-A1- 0 037 002
- EP-A1- 0 551 516
- EP-A1- 0 821 161
- EP-A2- 1 302 683
- WO-A1-02/14690
- DE-A1- 10 102 255
- US-A- 2 065 311
- US-A- 2 130 379

## Beschreibung

Die Erfindung betrifft eine Windkraftanlage, umfassend einen Rotor und eine Lagerung für den Rotor mit mindestens einem Außenring, mindestens einem Innenring und Wälzkörpern, die zwischen Außenring und Innenring angeordnet sind, wobei der Außenring und der Innenring mindestens zwei Laufbahnen aufweisen, wobei die beiden Laufbahnen einen Winkel einschließen, wobei die Wälzkörper rollenförmig ausgebildet sind, wobei die Laufbahnen des Außenrings den Winkel einschließend einander zugeneigt angeordnet sind und die Laufbalnen des Innenrings den Winkel einschließend einander abgewendet angeordnet sind.

Lagerungen für den Rotor einer Windkraftanlage sind im Stand der Technik bekannt. Verwiesen wird auf die DE 101 02 255 A1**,** die eine Windenergieanlage mit einem an der Spitze eines Turmes zu befestigenden Maschinenträger offenbart. Dort ist vorgesehen, dass zur Lagerung ein Wälzlager zum Einsatz kommt, das ein einziges auch Momente aufnehmendes Lager zwischen einer Achshülse und einer Hohlwelle darstellt. Das Lager ist bevorzugt als zweireihiges Schrägrollenlager mit winkelig zueinander angeordneten Rollenreihen ausgebildet. Jede Rollenreihe kann dabei einen Winkel von etwa 45° mit der Achse der Achshülse und der Hohlwelle einschließen.

Eine ähnliche Lagerung ist aus der WO 02/079644 A1 bekannt. Dort wird eine Windkraftanlage offenbart, bei der zur Übertragung der Drehung des Rotors auf einen Generator ein Planetengetriebe zum Einsatz kommt. Die Planetengetriebeanordnung ist dabei gleichermaßen in einem zweireihigen Lager gelagert.

Mit den vorbekannten Lösungen ist es möglich, sowohl Kräfte als auch Momente durch ein einziges Lager vom Rotor auf den Turm einer Windkraftanlage zu übertragen. Die zweireihigen Lager gemäß dem Stand der Technik, die die Übertragung der Kräfte und Momente bewerkstelligen, sind dabei stets in sogenannter O-Anordnung ausgebildet. Dies hat den Vorteil, dass sich ein recht großer Stützabstand der Lager-Druckmittelpunkte zur Aufnahme der Momentenbelastung ergibt.

Je größer die Windkraftanlage und damit das Lager wird, desto geringer fällt jedoch dieser Vorteil aus, da - relativ gesehen - der Unterschied der Stützabstände immer kleiner wird.

Die vorbekannte Lagerung als zweireihige Lagerung in O-Anordnung hat darüber hinaus auch einige Nachteile. Problematisch ist insbesondere, dass das Eingangsdrehmoment nicht über einen einteiligen Lagerinnenring übertragen werden kann. Deshalb ist es schwierig, den Rotor direkt an den Lagerinnenring anzuflanschen. Gleichermaßen ist keine Direktanflanschung des Generators möglich.

Eine weitere Lösung, die zur Lagerung des Rotors einer Windkraftanlage mehrere Lager einsetzt, ist in der EP 0 037 002 A1 beschrieben. Ähnliche Lösungen zeigen die EP 0 551 516 A1, die EP 0 821 161 A1, die US 2 130 379 A, die US 2 065 311 und die EP 1 302 683 A2**.**

Der Erfindung liegt daher die **Aufgabe** zugrunde, eine Lageranordnung der eingangs beschriebenen Art zu schaffen, die die genannten Nachteile überwindet.

Die **Lösung** dieser Aufgabe durch die Erfindung ist dadurch gekennzeichnet, dass der Winkel zwischen 35° und 55° liegt, dass der Außenring aus zwei benachbart angeordneten Ringteilen besteht, wobei die Ringteile von mindestens einer in der Richtung der Drehachse der Lagerung verlaufenden Bohrung durchsetzt werden, dass der Innenring einteilig ausgebildet ist, wobei er von mindestens einer in der Richtung der Drehachse der Lagerung verlaufenden Bohrung durchsetzt wird und wobei der Rotor direkt am Innenring angeflanscht ist, so dass sich im Betrieb der Windkraftanlage der Innenring dreht.

Bevorzugt sind die Wälzkörper als Kegelrollen oder als Zylinderrollen ausgebildet.

Gemäß einer bevorzugten Ausgestaltung kann vorgesehen werden, dass mindestens einer der beiden Lagerringe in einzelne Lagersegmente unterteilt ausgebildet ist.

Mit der vorgeschlagenen Lageranordnung werden im Vergleich zum vorbekannten Stand der Technik verschiedene Vorteile erreicht:
Nunmehr ist es möglich, die Eingangs-Drehmomentenübertragung über einen einteiligen Lagerinnenring zu bewerkstelligen. Eine Welle ist hierfür nicht erforderlich.

Weiterhin ist es möglich, den Rotor direkt an den Lagerinnenring anzuflanschen. Ebenso ist eine direkte Anflanschung abtriebsseitig zum Getriebe bzw. zum Generator möglich.

Der kritische, feste Innenring-Sitz auf der Welle, der bei sich drehendem Innenring (bei Umfangslast am Innenring) erforderlich ist, kann entfallen. Somit ergibt sich nicht mehr das Risiko, dass Passungsrost entsteht.

Weiterhin findet keine zusätzliche Systemverformung über die Welle statt.

Durch das Entfallen des erforderlichen festen Innenring-Sitzes gibt es keinerlei Einfluss auf die Montage und damit auf die im Produktionswerk eingeschliffene Lagerluft bzw. Vorspannung. Damit ist sichergestellt, dass der Wert der Lagerluft bzw. Vorspannung auch nach der Montage klar definiert und in der Toleranz reduziert ist.

In der Zeichnung ist ein Ausführungsbeispiel der Erfindung dargestellt. Es zeigen:
- Figur 1: schematisch eine Windkraftanlage in der Seitenansicht und
- Figur 2: den Schnitt durch die Lagerung des Rotors der Windkraftanlage.

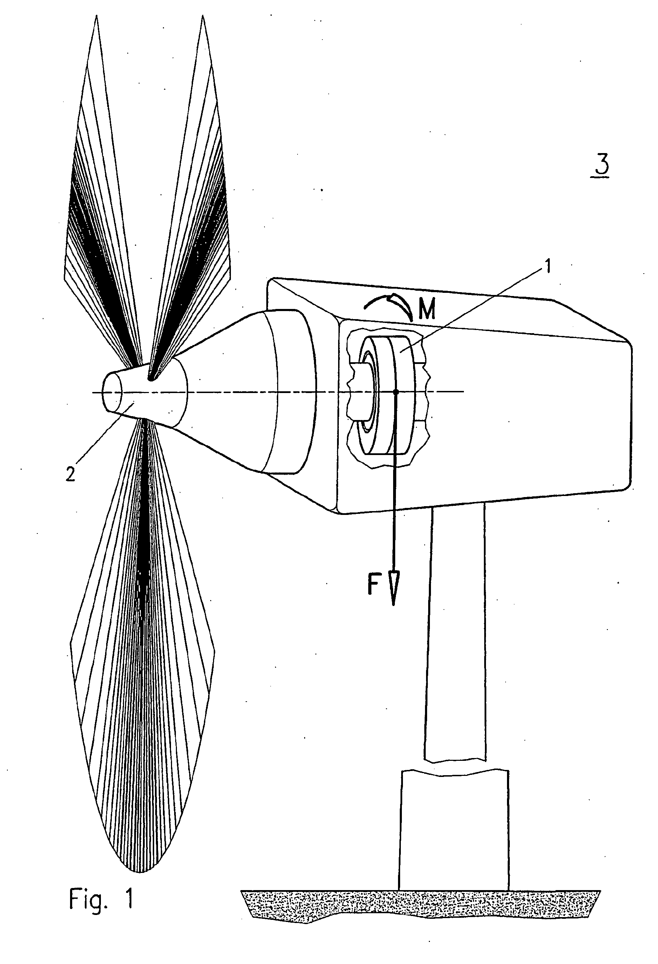

In Figur 1 ist eine Windkraftanlage 3 dargestellt, die einen Rotor 2 aufweist. Dieser muss in einer Lagerung 1 relativ zum Turm der Windkraftanlage 3 gelagert werden. Insbesondere müssen die Kräfte F und die Momente M, die vom Rotor 2 auf den Turm der Windkraftanlage 3 wirken, durch die Lagerung 1 aufgenommen werden.

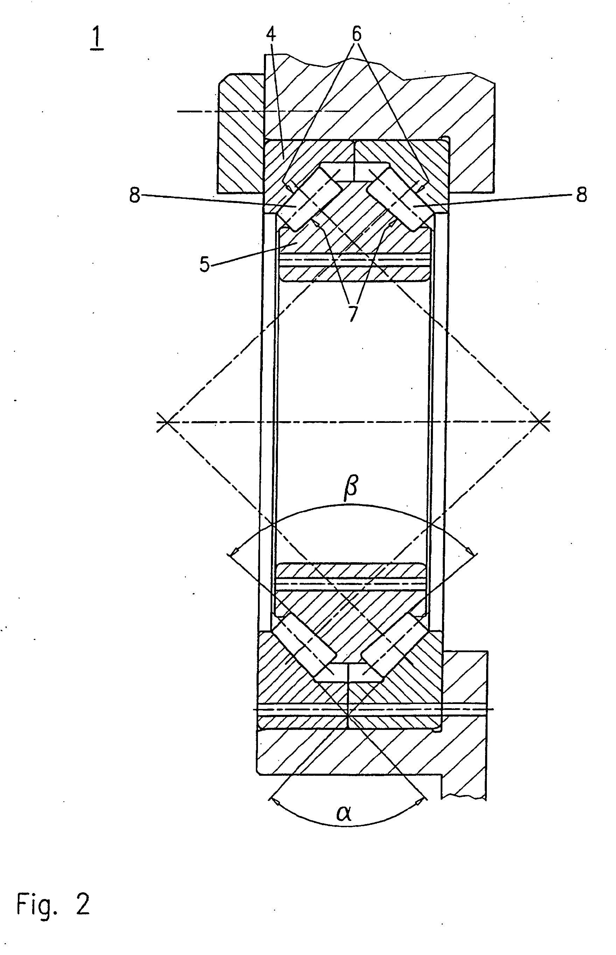

Der Aufbau der Lagerung 1 geht aus Figur 2 hervor. Die Lagerung besteht aus einem zweireihigen Kegelrollenlager. Hierzu sind Wälzkörper 8 in Form von Kegelrollen zwischen einem Außenring 4 und einem Innenring 5 angeordnet.

Sowohl der Außenring 4 als auch der Innenring 5 weisen jeweils zwei Laufbahnen 6, 7 auf. Die Laufbahnen 6, 7 schließen jeweils zueinander einen Winkel α bzw. β ein, der in Figur 2 eingetragen ist.

Wie weiter zu sehen ist, sind dabei die Laufbahnen 6 des Außenrings 4 so zueinander angeordnet, dass sie den Winkel α zueinander einschließen und dabei die Laufbahnen und namentlich deren Oberflächen einander zugeneigt sind. Demgegenüber schließen die Laufbahnen 7 des Innenrings 5 zwar auch einen Winkel β ein, allerdings sind die Laufbahnen 7 bzw. deren Oberfläche einander abgewandt.

Hierdurch ergibt sich, dass die zweireihige Kegelrollenlagerung als X-Lagerung ausgebildet ist.

Nicht dargestellt ist, dass der Außenring 4 und/oder der Innenring 5 aus einzelnen Ringsegmenten zusammengesetzt sein kann. Gleichermaßen ist es möglich, den Außenring 4 und/oder den Innenring 5 in Lagerachsrichtung geteilt auszubilden.

Beim Ausführungsbeispiel gemäß Figur 2 ist zu sehen, dass der Außenring 4 aus zwei axial geteilten Teilringen zusammengesetzt ist.

Im oberen Teil von Figur 2 ist illustriert, dass der Außenring 4 geklemmt werden kann. Alternativ hierzu zeigt der untere Teil in Figur 2, dass der Außenring 4 an ein Trägerelement angeschraubt sein kann.

Zur Führung der einzelnen Kegelrollen 8 sind gleichermaßen verschiedene Möglichkeiten denkbar. Beispielsweise können die Rollen außenbordgeführt sein. Alternativ hierzu können sie auch innenbordgeführt sein.

### Bezugszeichenliste

- 1: Lagerung
- 2: Rotor
- 3: Windkraftanlage
- 4: Außenring
- 5: Innenring
- 6: Laufbahnen des Außenrings
- 7: Laufbahnen des Innenrings
- 8: Wälzkörper

- α: Winkel
- β: Winkel
- F: Kraft
- M: Moment

## Patentansprüche

1. Windkraftanlage (3), umfassend einen Rotor (2) und eine Lagerung (1) für den Rotor (2), wobei die Lagerung (1) aufweist:
- mindestens einen Außenring (4),
- mindestens einen Innenring (5) und
- Wälzkörper (8), die zwischen Außenring (4) und Innenring (5) angeordnet sind,
wobei der Außenring (4) und der Innenring (5) mindestens zwei Laufbahnen (6, 7) aufweisen,
wobei die beiden Laufbahnen (6, 7) einen Winkel (α, β) einschließen, wobei die Wälzkörper (8) rollenförmig ausgebildet sind,
wobei die Laufbahnen (6) des Außenrings (4) den Winkel (α) einschließend einander zugeneigt angeordnet sind und die Laufbahnen (7) des Innenrings (5) den Winkel (β) einschließend einander abgewendet angeordnet sind,
**dadurch gekennzeichnet,**
**dass** der Winkel (α, β) zwischen 35° und 55° liegt,
**dass** der Außenring (4) aus zwei axial geteilten Ringteilen zusammengesetzt ist, wobei die Ringteile von mindestens einer in der Richtung der Drehachse der Lagerung (1) verlaufenden Bohrung
durchsetzt werden,
**dass** der Innenring (5) einteilig ausgebildet ist, wobei er von mindestens einer in der Richtung der Drehachse der Lagerung (1) verlaufenden Bohrung durchsetzt wird und
**dass** der Rotor (2) direkt am Innenring (5) angeflanscht ist, so dass sich im Betrieb der Windkraftanlage (3) der Innenring (5) dreht.

2. Lagerung nach Anspruch 1, **dadurch gekennzeichnet, dass** die Wälzkörper (8) Kegelrollen sind.

3. Lagerung nach Anspruch 1, **dadurch gekennzeichnet, dass** die Wälzkörper (8) Zylinderrollen sind.

4. Lagerung nach einem der Ansprüche 1 bis 3, **dadurch gekennzeichnet, dass** mindestens einer der beiden Lagerringe (4, 5) in einzelne Lagersegmente unterteilt ausgebildet ist.

## Claims

1. Wind power plant (3), comprising a rotor (2) and a mounting (1) for the rotor (2), the mounting (1) having;
- at least one outer ring (4),
- at least one inner ring (5) and
- rolling bodies (8) which are arranged between the outer ring (4) and inner ring (5),
the outer ring (4) and inner ring (5) having at least two raceways (6, 7),
the two raceways (6, 7) forming an angle (α, β),
the rolling bodies (8) being designed in the form of rollers,
the raceways (6) of the outer ring (4) being arranged so as to be inclined towards one another to form the angle (α), and the raceways (7) of the inner ring (5) being arranged so as to be turned away from one another to form the angle (β),
**characterized**
**in that** the angle (α, β) lies between 35° and 55°,
**in that** the outer ring (4) is composed of two axially split ring parts, the ring parts being pierced by at least one bore running in the direction of the axis of rotation of the mounting (1),
**in that** the inner ring (5) is formed in one part, in this case being pierced by at least one bore running in the direction of the axis of rotation of the mounting (1), and
**in that** the rotor (2) is flanged directly on the inner ring (5), so that the inner ring (5) rotates when the wind power plant (3) is in operation.

2. Mounting according to Claim 1, **characterized in that** the rolling bodies (8) are tapered rollers.

3. Mounting according to Claim 1, **characterized in that** the rolling bodies (8) are cylindrical rollers.

4. Mounting according to one of Claims 1 to 3, **characterized in that** at least one of the two bearing rings (4, 5) is in a form subdivided into individual bearing segments.

## Revendications

1. Eolienne (3), comprenant un rotor (2) et un support sur palier (1) pour le rotor (2), le support sur palier (1) présentant :
- au moins une bague extérieure (4),
- au moins une bague intérieure (5) et
- des corps de roulement (8) qui sont disposés entre la bague extérieure (4) et la bague intérieure (5),
la bague extérieure (4) et la bague intérieure (5) présentant au moins deux chemins de roulement (6, 7),
les deux chemins de roulement (6, 7) formant un angle (α, β),
les corps de roulement (8) étant réalisés sous forme de rouleaux,
les chemins de roulement (6) de la bague extérieure (4), en formant l'angle (α), étant disposés de manière inclinée l'un vers l'autre et les chemins de roulement (7) de la bague intérieure (5), en formant l'angle (β), étant disposés de manière détournée l'un de l'autre, **caractérisée en ce que**
l'angle (α, β) est compris entre 35° et 55°,
la bague extérieure (4) se compose de deux parties annulaires divisées axialement, les parties annulaires étant traversées par au moins un alésage s'étendant dans la direction de l'axe de rotation du support sur palier (1),
la bague intérieure (5) étant réalisée d'une seule pièce, et étant traversée par au moins un alésage s'étendant dans la direction de l'axe de rotation du support sur palier (1) et
le rotor (2) étant directement bridé sur la bague intérieure (5) de telle sorte que la bague intérieure (5) tourne pendant le fonctionnement de l'éolienne (3).

2. Support sur palier selon la revendication 1, **caractérisé en ce que** les corps de roulement (8) sont des rouleaux coniques.

3. Support sur palier selon la revendication 1, **caractérisé en ce que** les corps de roulement (8) sont des rouleaux cylindriques.

4. Support sur palier selon l'une quelconque des revendications 1 à 3, **caractérisé en ce qu'**au moins l'une des deux bagues de palier (4, 5) est réalisée de manière divisée en segments de palier individuels.
